# FASCICULE DE BREVET EUROPEEN

(11) **EP 2 206 068 B1**
(45) Date de publication et mention de la délivrance du brevet: **05.04.2017**
(21) Numéro de dépôt: 08829728.8
(22) Date de dépôt: 28.08.2008
(51) Int. Cl.: G06F 21/62

(54) **BASE DE DONNEES DISTRIBUEE**
VERTEILTE DATENBANK
DISTRIBUTED DATABASE

(30) Priorité: 30.08.2007 FR 0706090
(43) Date de publication de la demande: 14.07.2010
(73) Titulaire: Xooloo, 75002 Paris (FR)
(72) Inventeur: VERET, Grégory, F-75018 Paris (FR)
(74) Mandataire: Cabinet Plasseraud
(86) Numéro de dépôt international: PCT/FR2008/051541
(87) Numéro de publication internationale: WO 2009/030864

(56) Documents cités:
- EP-A- 1 043 670
- US-A- 6 041 324
- US-A1- 2004 187 014
- US-A1- 2005 044 059
- US-A1- 2005 055 437
- US-A1- 2005 149 520
- US-A1- 2006 253 578
- US-B1- 6 785 810

## Description

L'invention se rapporte au domaine des bases de données d'adresses URL distribuées.

US-B1-6 785 810 décrit un dispositif pour transmettre,
rechercher et stocker des données sensibles. US6041324 divulgue une méthode pour valider des portions d'URL.

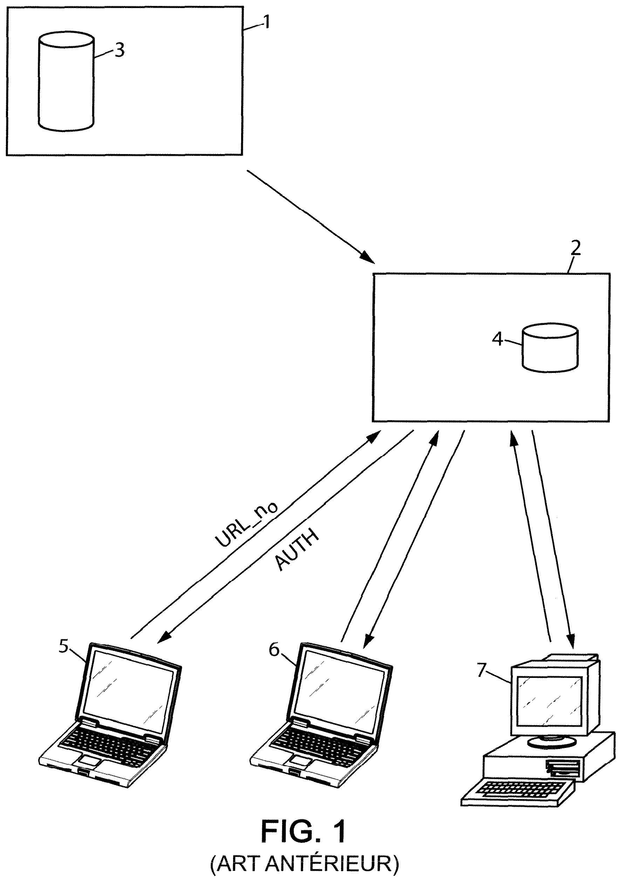

Comme représenté sur la figure 1, il est connu de transmettre d'un équipement central 1 vers un équipement distribué 2 une copie d'au moins une partie d'une base de données mère 3 stockée dans l'équipement central 1. Cette base de données 4 reçue par et mémorisée dans l'équipement distribué 2 est dite base de données distribuée, base de données embarquée ou encore base de données fille.

L'équipement distribué 2 est susceptible d'être interrogé quant au contenu de la base de données fille 4, par exemple par des équipements clients 5, 6, 7, lesquels peuvent comprendre des terminaux d'utilisateurs. Selon un autre exemple, l'équipement distribué comprend une interface utilisateur permettant de l'interroger directement.

Les bases de données mère 3 et fille 4 sont structurées en entrées, chaque entrée comprenant au moins une valeur de champ de recherche et éventuellement un ou plusieurs attributs.

Lors d'une étape d'interrogation, l'équipement distribué 2 reçoit un message comprenant une information référencée URL_n₀ sur la figure 1. La base 4 est consultée afin de rechercher cette information URL_n₀ parmi les valeurs de champ de recherche de la base. L'équipement distribué 2 renvoie une réponse référencée AUTH sur la figure 1 en fonction d'un résultat de la recherche.

Par exemple, comme représenté sur la figure 1, la base 4 peut mémoriser une liste d'adresses URL (de l'anglais « Uniform Resource Locator »), et pour chaque URL une valeur d'attribut indiquant si le contenu correspondant à cet URL est déconseillé ou non aux enfants. L'équipement distribué 2 peut par exemple appartenir à un fournisseur d'accès sur Internet. Si la valeur URL_n₀ envoyée par l'équipement client 5, par exemple l'ordinateur d'un enfant, est retrouvée dans la base 4 et que l'attribut correspondant dans la base 4 a une valeur telle que l'accès n'est pas déconseillé aux enfants, l'équipement 2 renvoie une réponse AUTH autorisant l'équipement 5 à afficher le contenu correspondant à la valeur URL_n₀.

L'invention n'est en rien limitée aux applications de protection des enfants sur Internet.

L'équipement central et l'équipement distribué peuvent typiquement appartenir à des personnes différentes. Par exemple, la base de données fille est vendue ou louée par un producteur de bases de données contrôlant l'équipement central à une personne, par exemple un éditeur de logiciel ou un fournisseur d'accès à Internet, contrôlant l'équipement distribué. Cette dernière est ainsi en mesure d'utiliser la base de données fille pour un autre usage que celui prévu par le producteur de bases de données. Par exemple, la base de données fille pourrait être transférée à une tierce personne depuis l'équipement distribué, divulguée, copiée, réutilisée en totalité ou partiellement, etc.

L'invention vise à limiter les utilisations des bases de données distribuées autres que celles prévues par le producteur de bases de données.

Selon un premier aspect, l'invention a pour objet un module destiné à être embarqué dans un équipement d'un réseau de télécommunications, et comprenant :
- une base de données mémorisant au moins des valeurs de champ de recherche comprenant des adresses URL, certaines au moins de ces adresses URL étant mémorisées sous une forme encryptée, et
- des moyens d'encryptage aptes à encrypter une information reçue par le module, de façon à permettre une recherche de l'information dans la base de données par comparaison avec les valeurs de champ de recherche encryptées de la base de données.

Avantageusement, toutes les valeurs de champ de recherche de la base de données sont encryptées, mais on peut bien entendu prévoir de laisser certaines valeurs de champ de recherche en clair.

On peut prévoir que les moyens d'encryptage sont aptes à mettre en oeuvre le même algorithme que celui effectué pour conduire aux valeurs encryptées de champs de recherche, éventuellement avec la ou les même(s) clé(s). Toutefois, n'importe quel algorithme peut être mis en oeuvre par les moyens d'encryptage pourvu que, pour une information donnée, mémorisée sous forme encryptée dans la base de données, l'encryptage de cette information en clair par les moyens d'encryptage permette de retrouver l'entrée de la base de données qui correspond à cette information.

Avec le module selon un aspect de l'invention, il est possible d'interroger le module quant au contenu de la base de données, sans qu'il soit nécessaire de décrypter des valeurs de champ de recherche de la base de données. Le cryptage univoque mis en oeuvre permet une consultation de la base de données tout en gardant ses valeurs de champ de recherche encryptées, limitant ainsi les usages potentiels de la base de données autres que ceux prévus par le producteur.

Les valeurs des champs de recherche de la base de données fille étant encryptées, la base de données fille peut être transmise d'un équipement sécurisé à un autre sans risque de divulgation. En effet, quand bien même un pirate intercepterait la base de données en cours de transmission, il serait incapable d'exploiter la base interceptée du fait du cryptage des champs de recherche. Il en serait de même si le pirate parvenait à surmonter les protections d'un équipement sécurisé et accédait à la base de données mémorisée dans cet équipement.

L'invention peut trouver une application dans le domaine du contrôle d'accès, par exemple la protection des enfants sur Internet. Le module selon un aspect de l'invention peut être embarqué dans un équipement distribué contrôlé par une personne autre que le producteur, comme par exemple un éditeur de logiciels ou un fournisseur d'accès sur Internet. Du fait de l'encryptage des valeurs de champs de recherche de la base de données fille, les utilisations possibles de la base de données fille par cette autre personne sont limitées. Par exemple, le transfert de la base de données fille vers un tiers équipement est relativement délicat, dans la mesure où la base de données fille est inutilisable sans les moyens d'encryptage. Egalement, modifier la base de données fille à partir de l'équipement distribué risque d'entrainer des perturbations, dans la mesure où les valeurs de champ de recherche ne sont pas lisibles en clair et où l'autre personne ignore le contenu initial de la base de données.

L'invention peut bien entendu être utilisée dans d'autres domaines d'application.

Les moyens de cryptage peuvent être des moyens logiciels, par exemple une interface de type API (de l'anglais « Application Programming Interface »), et/ou des moyens matériels (« hardware » en anglais), par exemple une carte à puce (« smartcard » en anglais), une clé USB, un CD-ROM, un disque dur etc.

Avantageusement, les moyens de cryptage sont protégés, de sorte qu'il est difficile à une personne mal intentionnée d'accéder au code des moyens de cryptage. Il sera ainsi d'autant plus difficile à cette personne de transférer le module à un tiers équipement, ou de modifier elle-même la base de données, dans la mesure où le cryptage utilisé lui est inconnu.

L'invention n'est pas limitée par la manière dont cette protection est mise en oeuvre. On peut prévoir une protection logicielle, par exemple un chiffrage du code de l'API, ou une protection matérielle, par exemple en choisissant des moyens de cryptage comprenant une carte à puce.

Alternativement, les moyens de cryptage peuvent être librement accessibles, en particulier si les moyens de cryptage sont incapables de décrypter les valeurs encryptées. Le procédé selon un aspect de l'invention garantit alors un non-accès aux données de la base, les valeurs des champs de recherche étant sous une forme encryptée.

Le cryptage des valeurs de champs de recherche peut par exemple être destructif, c'est-à-dire qu'il est impossible de retrouver les valeurs en clair à partir des valeurs cryptées, garantissant ainsi une non-divulgation des valeurs de champ de recherche. Par exemple, le cryptage peut être effectué en appliquant un algorithme de hachage.

Le cryptage des valeurs de champs de recherche peut par exemple être effectué en utilisant un cryptage asymétrique. Le cryptage asymétrique consiste à utiliser des clés différentes pour le cryptage et le décryptage. Ainsi, le module peut conserver seulement la clé de cryptage, de sorte que même si une personne mal intentionnée accède au code stocké dans les moyens de cryptage, elle ne sera pas en mesure de décrypter les valeurs de champs encryptées de la base de données.

L'invention n'est en rien limitée par l'algorithme de cryptage utilisé.

On peut prévoir en outre un chiffrement global de la base de données, la clé de déchiffrage étant stockée dans une mémoire du module. Ce chiffrement global offre un niveau de protection supplémentaire, mais ne limite en rien la portée de l'invention.

La clé de déchiffrage global peut par exemple être mémorisée dans l'API. L'API peut déchiffrer la base de données en utilisant cette clé, par exemple une seule fois suite à l'installation du module dans l'équipement distribué, ou à chaque réception d'un message de requête comprenant une valeur de champ de recherche. Dans le premier cas, on protège la base de données d'une attaque lors du transfert vers l'équipement distribué. Dans le deuxième cas, l'équipement distribué mémorise une base de données chiffrée - les valeurs de champs de recherche étant donc doublement protégées, ce qui limite encore davantage les utilisations non autorisées de la base de données.

Avantageusement, le module comprend une mémoire mémorisant un premier numéro de licence, des moyens de traitement aptes à calculer un second numéro de licence en fonction d'un identifiant de l'équipement dans lequel le module est embarqué, et des moyens de communication du premier et du second numéro de licence à un équipement central.

Ainsi, quand bien même une personne malveillante parviendrait à transférer le module à un tiers équipement, le module communiquerait alors à l'équipement central le premier numéro de licence et un second numéro de licence différent du numéro attendu pour ce premier numéro de licence. L'équipement central, typiquement contrôlé par le producteur de bases de données, serait alors à même d'appliquer une sanction, par exemple, le blocage pur et simple de la base de données transférée.

L'invention n'est bien entendu pas limitée à une telle sécurisation avec deux numéros de licence.

L'identifiant de l'équipement permettant de calculer le second numéro de licence peut par exemple être un identifiant du système d'exploitation de l'équipement dans lequel le module est embarqué, une adresse de réseau de cet équipement, par exemple une adresse IP, etc.

La mémoire, les moyens de traitement et les moyens de communication peuvent être intégrés dans l'API effectuant par ailleurs le cryptage des informations reçues en vue d'une recherche dans la base de données.

La communication des numéros de licence peut être effectuée automatiquement par l'API, lors d'une mise à jour de la base de données par exemple.

Selon un autre aspect, l'invention a pour objet un procédé de construction d'un module, dans lequel on encrypte au moins une valeur de champ comprenant une adresse URL. On mémorise cette valeur encryptée en tant que valeur de champ de recherche d'une base de données du module. On adjoint à la base de données des moyens d'encryptage aptes à encrypter une information de façon à permettre une recherche de cette information dans la base de données par comparaison avec les valeurs encryptées de champ de recherche.

Ce procédé, qui peut être mis en oeuvre par un équipement d'un producteur de bases de données par exemple, permet de construire un module selon un aspect de l'invention.

Selon encore un autre aspect, l'invention a pour objet un procédé d'interrogation d'une base de données d'adresses URL embarquée dans un équipement d'un réseau de télécommunications, comprenant les étapes consistant à recevoir un message de requête, extraire une information de ce message, et encrypter l'information extraite. Cette information encryptée est recherchée dans la base de données par comparaison de l'information encryptée avec des valeurs d'adresses URL encryptées et mémorisées dans la base en tant que valeurs de champ de recherche. Enfin, une réponse est envoyée en fonction d'un résultat de la recherche. Si l'information est retrouvée dans la base de données, la réponse envoyée peut éventuellement comprendre la valeur d'un ou plusieurs attribut(s) correspondant(s).

Ce procédé, qui peut être mis en oeuvre par une API par exemple, permet d'utiliser la base de données sans qu'il soit nécessaire d'accéder en clair aux valeurs de champs de recherche. Ces valeurs peuvent ainsi rester encryptées, protégeant par-là la base d'utilisations non-autorisées.

Avantageusement, l'étape d'extraction consiste à découper une valeur de champ de recherche du message de requête en portions élémentaires, et à générer un ensemble de combinaisons des portions élémentaires, chaque combinaison de cet ensemble constituant une information à encrypter.

Ce découpage permet de mémoriser moins d'entrées dans la base de données. Par exemple, si le message de requête comprend une valeur de champ de recherche correspondant à
http://www.foo.net/truc/bidule/machin.html#truc?bidule,
la base de donnée peut se contenter de la valeur encryptée correspondant à www.foo.net. La valeur du message de requête peut ainsi être rattachée à une valeur de la base de données, sans qu'il soit nécessaire de mémoriser toutes les variantes.

Le découpage peut être effectué en repérant dans la valeur reçue dans le message de requête certains caractères particuliers, comme « / », « ? », « # », « . », etc. Les portions élémentaires peuvent inclure ces caractères, ou bien commencer au caractère suivant un de ces caractères repérés et/ou se terminer au caractère précédent un de ces caractères repérés.

En outre, pour au moins une valeur de champ de recherche, on peut prévoir de mémoriser dans la base de données, une valeur d'attribut indiquant la nature de cette valeur de champ de recherche. Par exemple, à la valeur encryptée correspondant à www.foo.net, peut correspondre une valeur d'attribut « site » indiquant que toutes les combinaisons comprenant la portion élémentaire www.foo.net sont à rattacher à cette valeur de champ de recherche de la base de données. Par exemple, à la valeur encryptée correspondant à www.foo.net/truc/chose.htm, peut correspondre une valeur d'attribut « URL exacte » indiquant que seules les combinaisons encryptées identiques à cette valeur encryptée sont à rattacher à cette valeur.

Bien entendu, on peut prévoir que certaines valeurs d'attributs sont prioritaires sur d'autres. Ainsi, si à partir d'un même message reçu, plusieurs valeurs encryptées de champ de recherche sont reconnues dans la base de données, la priorité accordée aux attributs correspondants permet de choisir une de ces valeurs encryptées. Par exemple, la valeur d'attribut « adresse exacte » peut être prioritaire par rapport à la valeur « site ». Il est ainsi envisageable par exemple d'autoriser l'accès à tout un site sauf à un sous-répertoire déterminé de ce site, et ce avec deux entrées seulement dans la base de données.

Il est ainsi possible de qualifier les données mémorisées dans la base relativement précisément, et de répondre aux messages de requête de façon relativement pertinente.

On peut aussi prévoir que l'étape d'extraction comprend l'étape consistant à générer à partir d'une valeur de champ de recherche reçue dans le message de requête, cette valeur comprenant une chaine de caractères initiale, un ensemble comprenant la chaîne de caractères initiale et/ou au moins une chaîne de caractères obtenue par suppression d'au moins un caractère à l'une et/ou l'autre des extrémités de la chaine de caractère initiale, chaque chaîne de caractères de l'ensemble constituant une information à encrypter. L'étape de recherche est effectuée itérativement, en choisissant l'information à rechercher par longueur de chaîne décroissante, et en cas de succès à une itération donnée, il est mis fin à la recherche.

Les informations de l'ensemble peuvent être générées en une seule fois, préalablement à la ou les étapes d'encryptage. On peut prévoir une étape d'ordonnancement des chaines de caractères de l'ensemble par taille, la première chaine comprenant la chaine la plus longue et la dernière chaine comprenant la chaine la plus courte. L'étape de recherche est effectuée pour la première chaine (encryptée), et en cas d'échec, répétée itérativement en choisissant la chaine suivante. En cas de succès, il est mis fin à l'itération.

On peut alternativement prévoir de ne générer une chaine de caractères de l'ensemble seulement en cas d'échec de la recherche pour la chaine de caractères précédente. Si la première itération est un succès, l'ensemble comprend alors une seule chaine de caractères.

L'ensemble peut comprendre ou ne pas comprendre la chaine initiale.

Selon encore un autre aspect, l'invention a pour objet un procédé d'interrogation d'une base de données, comprenant les étapes consistant à
- recevoir un message de requête comprenant une valeur de champ de recherche composée d'une chaîne de caractères initiale,
- rechercher ladite valeur de champ de recherche dans la base de données de façon itérative, chaque itération correspondant à la recherche d'une information par comparaison avec les valeurs de champs de recherche stockées dans la base de données, l'information étant choisie par longueur de chaine décroissante d'une itération à l'autre parmi un ensemble comprenant la chaîne de caractères initiale et/ou au moins une chaîne de caractères obtenue par suppression d'au moins un caractère à l'une et/ou l'autre des extrémités de la chaine de caractère initiale.

Avantageusement, le procédé comprend en outre l'étape consistant à mettre fin à la recherche en cas de succès lors d'une itération donnée. Ainsi à la première itération pour laquelle la recherche est fructueuse, il est mis fin à la recherche, de sorte qu'aucune recherche n'est effectuée pour des chaines de caractères plus courtes (que la chaine pour laquelle la recherche a été fructueuse).

L'invention n'est en rien liée par cette caractéristique. On peut par exemple prévoir d'effectuer la recherche par longueur de chaine décroissante en répétant les itérations jusqu'à par exemple une longueur de chaine minimale prédéterminée (fixée par exemple à un caractère, ou trois caractères), puis de choisir une chaine parmi les chaines pour lesquelles la recherche est un succès.

Le procédé de recherche selon cet aspect de l'invention peut permettre d'éviter les étapes liées à la qualification d'une chaine de caractère.

Par exemple, dans le cas d'un procédé dans lequel, suite à la réception d'un message de recherche comprenant une adresse URL, on recherche seulement cette URL exacte, par exemple
http://www.foo.net/truc/bidule/machin.html, et/ou l'adresse de site correspondant à cet URL, par exemple, http://www.foo.net/, il est nécessaire d'effectuer ces étapes liées à la qualification.

Par exemple, la base de données peut être structurée selon les valeurs d'attribut : il est alors nécessaire, avant de commencer la recherche, de savoir si une information recherchée est une adresse exacte ou une adresse de site, afin de savoir dans quelle zone mémoire effectuer la recherche.

Selon un autre exemple, la recherche par comparaisons est effectuée sans apriori quant à la qualification, mais une fois une information retrouvée, on vérifie la valeur de l'attribut correspondant dans la base de données. Par exemple, pour une valeur de champ de recherche correspondant à
http://www.foo.net/truc/bidule/machin.html#truc?bidule,
si http://www.foo.net/ seulement est trouvé avec l'attribut « adresse exacte », il est considéré que la recherche est infructueuse. Une étape de test quant à la valeur de l'attribut est donc nécessaire.

En proposant une recherche systématique de la chaine la plus longue à la plus courte, le procédé décrit plus haut permet d'éviter ces étapes liées à la qualification de la chaine recherchée. En effet, avantageusement, lorsqu'une itération donnée se révèle fructueuse, aucune recherche n'est effectuée sur des chaines plus courtes.

En outre, ce procédé offre une relative souplesse pour la création des bases de données. Avec le procédé décrit ci-dessus dans lequel seulement l'URL exacte et/ou l'adresse de site peuvent être recherchés, il est relativement délicat de référencer tout un sous-répertoire ou tout autre niveau intermédiaire. Par exemple, si l'on souhaite autoriser l'accès à tout le site www.foo.net à l'exception du sous-répertoire truc, il est nécessaire de référencer toutes les adresses URL exactes du sous répertoire truc.

Avec le procédé de recherche systématique, il suffit de référencer deux entrées : http://www.foo.net/ et http://www.foo.net/truc/. Lors d'une recherche itérative de la valeur http://www.foo.net/truc/bidule/machin.html#truc?bidule la chaine de caractères http://www.foo.net/truc/ sera reconnue avant http://www.foo.net/ puisqu'elle est plus longue, et l'accès à l'URL sera refusé.

Ce procédé permet de s'affranchir des lourdeurs liées à la qualification des champs de recherche dans la base de données.

La base de données peut être une base de données distribuée, ou bien tout autre type de base de données.

La chaîne de caractères initiale peut être une adresse URL exacte, ou toute autre information.

Avantageusement, chaque itération peut comprendre, préalablement aux étapes de comparaisons, une étape d'encryptage de la chaine de caractères à rechercher. Les champs de recherche de la base de données peuvent en effet être mémorisés sous forme encryptée, de façon à limiter les usages possibles de la base de données.

Alternativement, la recherche est effectuée sur la base de comparaisons de valeurs en clair.

Avantageusement, à chaque itération, l'information correspondante comprend une chaine de caractères obtenue par suppression d'un ou plusieurs caractère(s) particulier(s) du type « / », « ? », « # », « . », etc. ou par suppression des caractères non-particulier (du type les lettres et les chiffres) précédent ou suivant un caractère particulier, par exemple un caractère de ponctuation, au début ou à la fin respectivement, de la chaine de caractère de l'information recherchée lors de l'itération précédente.

On évite ainsi de perdre du temps à rechercher des chaines non plausibles, du type http://www.foo.net/tr

Ainsi, à partir de l'adresse exacte http://www.foo.net/truc/index.htm,
seules les chaines suivantes par exemple seraient susceptibles d'être recherchées :
http://www.foo.net/truc/index.htm
http://www.foo.net/truc/index.
http://www.foo.net/truc/index
http://www.foo.net/truc/
http://www.foo.net/truc
http://www.foo.net/
http://www.foo.net
www.foo.net

D'autres particularités et avantages de la présente invention apparaîtront dans la description ci-après.
La figure 1 montre un exemple de système mettant en oeuvre une base de données distribué.
La figure 2 montre un exemple de système mettant en oeuvre une base de données distribuée selon un aspect de l'invention.
La figure 3 montre un exemple de module selon un mode de réalisation de l'invention, installé dans un équipement distribué.
La figure 4 illustre un procédé de construction de module selon un mode de réalisation de l'invention.
La figure 5 est un organigramme illustrant un procédé mis en oeuvre par un module selon un mode de réalisation de l'invention.
La figure 6 est un organigramme illustrant un procédé selon un autre mode de réalisation de l'invention.

Les éléments identiques ou similaires peuvent avoir les mêmes références d'une figure à l'autre.

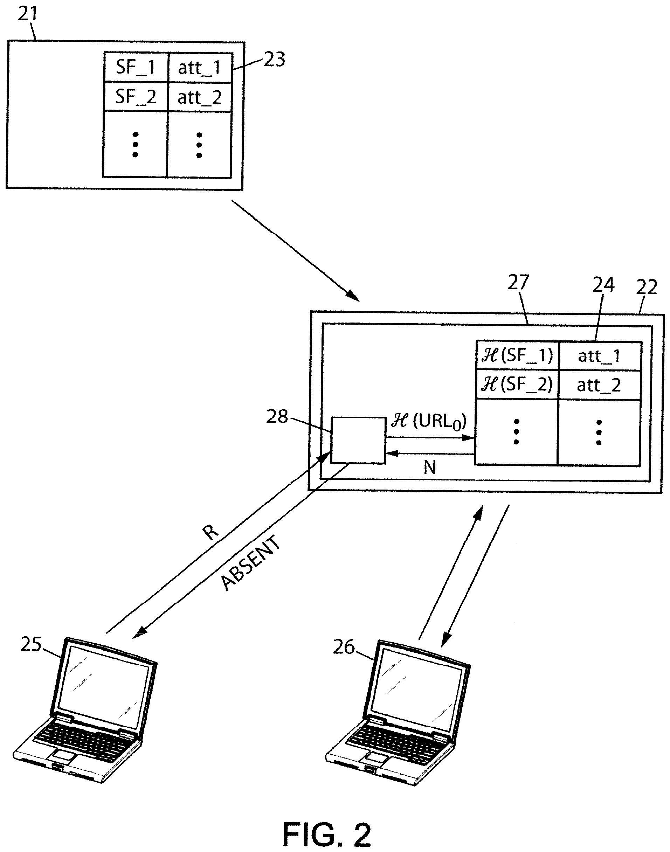

Le système de la figure 2 comprend un équipement central 21 mémorisant une base de données mère 23. La base 23 est structurée en entrées, chaque entrée comprenant dans cet exemple une valeur de champs de recherche SF_1, SF_2, etc. et un attribut att_1, att_2, etc.

Dans cet exemple, la base de données 23 mémorise les valeurs de champs de recherche SF_1, SF_2 en clair, permettant ainsi une manipulation aisée de la base 23 par un producteur de base de données contrôlant l'équipement central 21. Alternativement, on peut prévoir que la base de données mère mémorise les valeurs de champ de recherche sous une forme encryptée, pour davantage de sécurité par exemple.

Les valeurs de champs SF_1, SF_2, etc. sont encryptées, par exemple en utilisant une fonction de hachage et mémorisées sous forme hachée en tant que valeurs de champ de recherche d'une base de données fille. Le hachage peut par exemple être effectué en utilisant une fonction de hachage bien connue, du type Haval par exemple.

Cette base de données fille est transmise à un équipement distribué 22, dans un module 27 comportant en outre des moyens de cryptage, par exemple une application 28 apte à utiliser cette fonction de hachage.

Si un équipement client 25, 26 interroge l'équipement distribué 22 en envoyant un message de requête R, l'application 28 extrait de ce message une information URL₀, et hache cette information. La recherche parmi les entrées de la base de données fille 24 est effectuée sur la base de cette information hachée.

En effet, si la base 24 comprend une entrée correspondant à cette information URL₀, alors une des valeurs de champ de recherche hachées 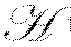 (SF_1), 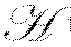 (SF_2), etc. est égale à la valeur de l'information hachée 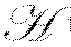 (URL₀). On peut prévoir que si l'information hachée est retrouvée, le module 27 renvoie une réponse positive, ou bien encore une valeur d'attribut correspondant à cette information hachée au sein de la base 24. On peut prévoir que si l'information hachée n'est pas retrouvée, le module 27 renvoie une réponse négative, comme représenté sur la figure 2.

Les valeurs des champs de recherche de la base de données fille étant encryptées, la base de données fille peut être transmise d'un équipement sécurisé à un autre sans risque de divulgation.

L'invention peut ainsi trouver une application dans le domaine des bases de données de sites illicites dans un pays donné, par exemple les sites pédophiles ou les sites de jeux d'argent en France. L'invention permet de transférer tout ou partie de ces bases, par exemple en vue de recoupements entre services de police, sans prendre le risque de divulguer une liste de sites illicites à une personne mal intentionnée. Plus généralement, comme l'invention permet de limiter les usages non autorisés de ces bases de données, l'invention permet d'offrir un plus large accès à ces bases de données pour leur utilisation normale.

Une fois la base 24 installée, l'équipement distribué 22 peut communiquer avec l'équipement central 21, en particulier à des fins de mise à jour de la base de données fille 24. La base 24 peut en effet être rafraichie relativement fréquemment, par exemple tous les jours ou toutes les semaines, pour refléter les dernières modifications apportées à la base mère 23.

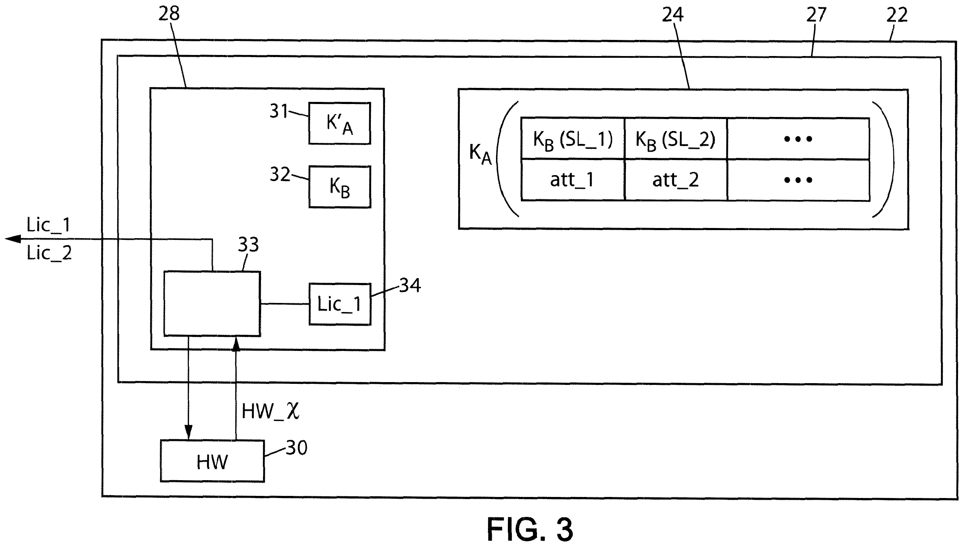

La figure 3 montre de façon schématique un autre exemple de module 27 mémorisé dans un équipement distribué 22. Dans cet exemple, le module 27 comprend une base de données 24 globalement chiffrée avec une clé K_{A}. Le module 27 comprend en outre une API 28 avec une mémoire 31 stockant une clé K_{A}' permettant de déchiffrer le contenu de la base de données 24 dans sa globalité. Lorsque le module 27 reçoit un message de requête en vue d'une consultation de la base de données fille, l'API commence par déchiffrer cette base à l'aide de la clé K_{A}'.

Dans cet exemple, l'algorithme de chiffrage global de la base de données fille est asymétrique, c'est-à-dire que les clés K_{A} et K_{A}' sont distinctes, mais il peut bien entendu en être disposé autrement.

En outre, comme on l'a vu précédemment, la base 24 mémorise des valeurs de champs de recherche sous forme encryptée K_{B}(SL_1), K_{B}(SL_2), etc. Dans cet exemple, l'encryptage des valeurs de champ de recherche a été effectué au sein d'un équipement central (non représenté sur la figure 3) en utilisant un algorithme de cryptage asymétrique, par exemple RSA (pour Rivest Shamir Adleman), avec une clé de cryptage K_{B}. L'API 28 mémorise la valeur de cette clé de cryptage K_{B} dans une mémoire 32 pour être capable de réaliser ce même cryptage suite à la réception d'un message de requête. La clé de décryptage correspondant à cette clé de cryptage K_{B} est inconnue de l'API, de sorte que l'API est incapable de décrypter les valeurs de champs de recherche encryptées.

Enfin, dans cet exemple, pour obtenir un fichier de mise à jour de l'équipement central, le module 27 doit envoyer, outre un couple identifiant de module-indice de version, deux numéros de licence. Le premier numéro de licence LIC_1 est conservé dans une mémoire 34 de l'API 28. Ce premier numéro de licence LIC_1 a par exemple été obtenu de l'équipement central lui-même. L'API comprend des moyens de traitement 33, par exemple un processeur, capables de lire une mémoire 30 de l'équipement distribué 22 stockant un identifiant matériel de l'équipement 22, par exemple un numéro de série *HW _χ*. Les moyens de traitement 33 calculent un second numéro de licence LIC_2 à partir du numéro de série *HW _χ*.

Les deux numéros de licence sont envoyés par des moyens de communication non représentés, par exemple un port de communication.

De manière générale, l'invention n'est pas limitée par la forme des moyens de traitement, de communication, ni des mémoires. Par exemple le composant utilisé comme moyen de traitement peut en outre servir de mémoire mémorisant les clés K_{A}', K_{B} et/ou le numéro LIC_1.

Ainsi, si le module 27 était installé sans autorisation de l'équipement central dans un tiers équipement distribué (non représenté), le second numéro de licence, fonction de l'équipement distribué dans lequel le module est embarqué, serait différent. Ainsi, lors d'une requête de mise à jour, l'équipement central est apte à détecter un transfert non autorisé de la base de données distribuée. L'équipement central est alors en mesure de réagir, par exemple en déclenchant une alarme, en signalant le problème au producteur de bases de données, en bloquant le module installé sans autorisation, etc.

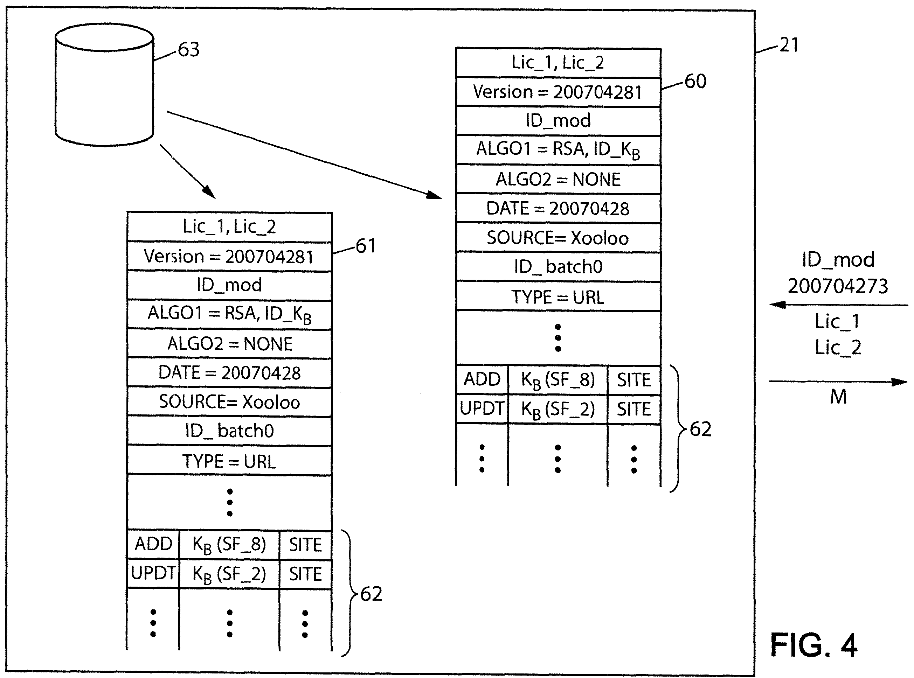

La figure 4 illustre un exemple de construction de module selon un mode de réalisation de l'invention.

Un équipement central 21 stocke une base de données d'origine 63 mémorisant des valeurs de champ de recherche en clair, par exemple au format XML, de l'anglais « Extensible Markup Language ».

L'équipement 21 stocke en outre des sous-ensembles de base de données 60, 61. Ces sous-ensembles 60, 61 sont destinés à être transmis, par exemple par téléchargement, à des équipements distribués. Les sous-ensembles 60, 61 sont eux-mêmes classés au sein de l'équipement central par équipement distribué, à l'aide d'un identifiant de module ID_mod.

Ces sous-ensembles comprennent des données provenant de la base de données d'origine 63, dans des lots ou batchs 62. Chaque batch 62 est structuré en entrées.

Certaines valeurs de champ de recherche SF_8, SF_2, etc., mémorisées dans la base de données mère sont encryptées suivant un premier algorithme. Ces valeurs encryptées K_{B}(SF_8), K_{B}(SF_2) sont mémorisées dans le sous-ensemble 60 en tant que valeur de champ de recherche d'une base de données destinée à l'équipement distribué correspondant à ce sous-ensemble 60.

Les sous-ensembles mémorisent un identifiant du premier algorithme et un identifiant de la clé de cryptage K_{B} utilisée (et/ou la clé de cryptage elle-même. Ces identifiants et éventuellement cette clé sont transmis avec le batch correspondant à un équipement distribué, lequel peut alors être à même de réaliser un module comprenant des moyens de cryptage et une base de données distribuée. L'équipement distribué mémorise alors les valeurs encryptées K_{B}(SF_8), K_{B}(SF_2) en tant que valeur de champ de recherche d'une base de données du module.

Alternativement, l'équipement central 21 peut adjoindre au sous-ensemble une API apte à réaliser le même cryptage. Cette API constitue avec le sous-ensemble un module destiné à être transmis intégralement à l'équipement distribué. Dans ce cas, au sein du sous-ensemble 60, les valeurs encryptées K_{B}(SF_8), K_{B}(SF_2) sont mémorisées en tant que valeur de champ de recherche du module.

Avantageusement, l'équipement client est capable de transmettre des données de mise à jour des bases distribuées. Les sous-ensembles 60, 61 peuvent en effet être agencés de façon à être utilisés à des fins de mise à jour. Par exemple, les sous-ensembles 60, 61 comprennent un numéro de version, par exemple 200704281. En outre, chaque entrée de batch comprend un champ d'opération définissant si cette entrée doit être ajoutée à la base de données distribuée, supprimée, ou mise à jour par exemple.

Lors d'une mise à jour de base distribuée, le module distribué interroge l'équipement central 21 pour vérifier si une mise à jour est disponible, télécharger des changements depuis l'équipement serveur et intégrer ces changements dans la base de données locale 24. Chaque module possède un identifiant ID_mod, permettant à l'équipement central 21 de reconnaître le sous-ensemble de base de données qui est destiné à ce module.

Pour un couple identifiant de module-indice de version donné, l'équipement central est donc capable de lister les éventuelles révisions intervenues depuis cette version.

En fonction du couple identifiant de module-indice de version, l'équipement central est en mesure de générer un fichier contenant les changements intervenus depuis cette version.

Ainsi, lorsqu'un équipement distribué interroge l'équipement central 21 quant à d'éventuelles modifications, l'équipement 22 transmet un identifiant de module ID_mod, et un indice représentatif de la dernière version reçue de l'équipement central 21, ainsi éventuellement que deux numéros de licence LIC_1, LIC_2. L'équipement central renvoie alors en réponse un fichier M contenant les changements intervenus depuis cette version, les valeurs de champs de recherche étant mémorisées sous une forme encryptée dans ce fichier. Le fichier M peut comprendre un sous-ensemble, ou être obtenu à partir d'un sous-ensemble, etc.

Le fichier M peut subir une compression, du type zip par exemple, et/ou être crypté avant la transmission.

Les sous-ensembles 60, 61 peuvent comprendre d'autre champs, par exemple un champ précisant le type des champs de recherche, ici URLs, un champ de date de création, d'entité source, d'algorithme de chiffrage global utilisé le cas échéant, éventuels commentaires, identifiant de batch, date à laquelle le batch peut être ignoré au format ISO-8601, etc.

On notera qu'un batch peut avoir plusieurs destinataires, c'est-à-dire qu'un batch peut être susceptible d'être transmis à plusieurs équipements distribués.

Le batch est structuré en entrées, chaque entrée pouvant comprendre plusieurs champs : un champ bien entendu optionnel d'identification interne pour le producteur, une adresse URL (ou tout autre information) sous forme encryptée (« digest »), l'algorithme de cryptage pouvant être spécifié en entête, un attribut dont la valeur indique la nature de l'URL, par exemple « site, « page » ou « domaine », un attribut définissant par exemple un droit d'accès à l'URL pour certaines personnes, comme des enfants, des adolescents, des salariés d'une entreprise etc.

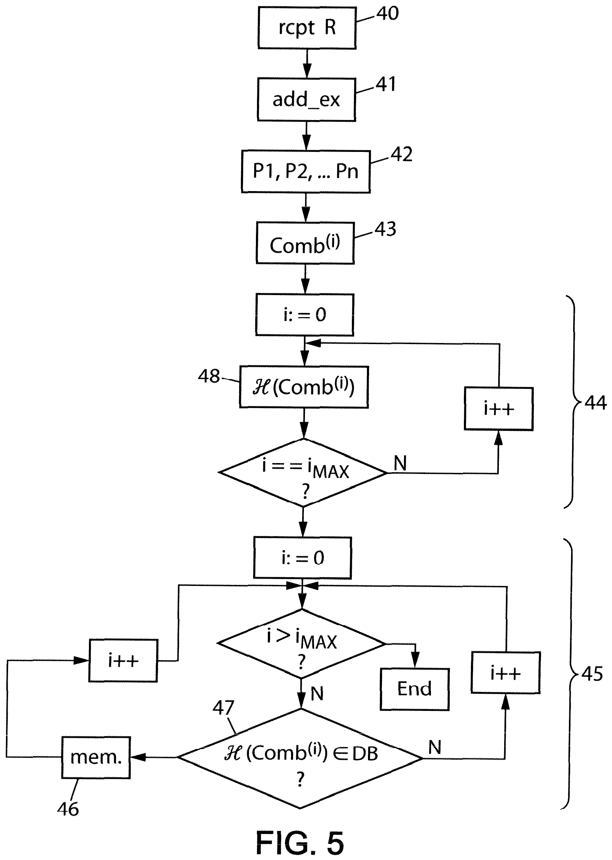

La figure 5 illustre un exemple d'algorithme mis en oeuvre par un module selon un mode de réalisation de l'invention.

Suite à une étape 40 de réception d'un message de requête comprenant une adresse URL, par exemple http://www.foo.net/truc/bidule/machin.html#truc?bidule,
le module isole lors d'une étape 41 cette adresse exacte.

Puis, lors d'une étape 42, l'adresse exacte est découpée en portions élémentaires P1, P2,...Pn, par exemple : (http://), (www.foo.net), (/truc/bidule/machin.html) et (#truc ?bidule)

Suit une étape 43 au cours de laquelle on génère un ensemble de combinaisons d'une ou plusieurs de ces portions élémentaires, par exemple : www.foo.net/truc/bidule/machin.html

On peut prévoir d'ignorer systématiquement la portion élémentaire (http://).

Le découpage peut être plus fin, par exemple : (http://), (www.), (foo.net), (/truc), (/bidule), /machin.html) et (#truc ?bidule)

L'étape 43 peut alors conduire à des combinaisons du type :
www.foo.net/
www.foo.net
www.foo.net/truc/
www.foo.net/truc
www.foo.net/truc/bidule/
www.foo.net/truc/bidule
etc.

On peut donc prévoir de ne conserver dans l'ensemble des combinaisons que certaines combinaisons plausibles. Par exemples, on ne conserve pas les combinaisons pour lesquelles les lettres « www » apparaissent relativement tard, du type
truc?bidule/truc/www.foo.net.

Chaque combinaison de l'ensemble de combinaisons conservées, indicée i sur la figure 4, constitue une information à encrypter lors d'une phase 44 d'encryptage.

Cette phase 44 met en jeu une boucle sur l'indice i. Chaque combinaison de l'ensemble de combinaisons conservées est hachée lors d'une étape 48.

La base de données peut alors être recherchée lors d'une phase de recherche 45 mettant par exemple en oeuvre une boucle sur l'indice i, sur la base de comparaisons des combinaisons hachées et des valeurs de champs de recherche encryptées lors d'étapes de comparaisons 47.

Si une comparaison montre qu'une combinaison hachée est égale à une des valeurs de champs de recherche encryptées, alors cette valeur encryptée est mémorisée lors d'une étape 46, avec les éventuels attributs correspondants.

On peut arrêter la recherche suite à la première mémorisation de valeur encryptée, ou bien balayer toutes les combinaisons avant d'arrêter la recherche 45, comme représenté sur la figure 5.

Dans ce dernier cas, il est possible que plusieurs valeurs encryptées aient été mémorisées. On peut envisager de classer ces valeurs trouvées en fonction de la valeur de leur attribut de nature, par exemple « site », « URL exacte », etc.

Une priorité peut être attribuée aux valeurs possibles de cet attribut. Par exemple, la valeur « URL exacte » peut être prioritaire devant la valeur « site ».

On choisit donc quelle entrée reconnaitre parmi les entrées mémorisées à l'étape 46 selon la valeur d'attribut la plus prioritaire.

Une réponse peut être renvoyée, indiquant par exemple si la recherche est fructueuse, et/ou indiquant une valeur d'un ou plusieurs attributs correspondant à l'entrée reconnue, par exemple « site autorisé ».

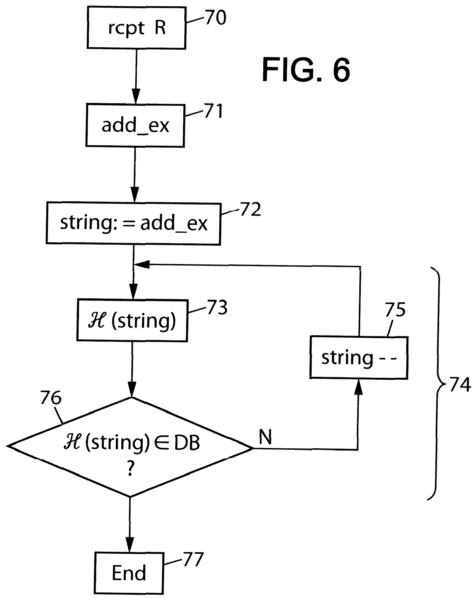

La figure 6 est un organigramme illustrant un procédé selon un mode de réalisation de l'invention. Suite à une étape 70 de réception d'un message de requête, une adresse exacte, dite également chaine de caractères initiale, est isolée lors d'une étape 71.

Une variable de recherche string se voit affecter la valeur de cette chaine de caractères initiale lors d'une étape 72. Suit alors une recherche itérative, référencée 74, au cours de laquelle on procède à des comparaisons de cette variable string avec des valeurs de champs de recherche stockées dans la base de données.

Ces comparaisons peuvent être effectuées à partir de valeurs en clair, ou bien, comme représenté sur la figure 6, à partir de valeurs encryptées. On prévoit alors une étape d'encryptage 73, par exemple par hachage, et une étape de recherche 76 à partir de valeurs hachées.

En cas d'échec, on génère lors d'une étape 75 une nouvelle chaîne de caractères, par suppression d'un ou plusieurs caractères à l'une et/ou l'autre des extrémités de la chaine de caractère string courante. Ces générations itératives constituent des extractions d'informations à encrypter lors de l'étape 73.

En cas de succès, on considère que la recherche est fructueuse et il est mis fin aux itérations 74 lors d'une étape 77.

On peut en outre prévoir une ou plusieurs étapes de test non représentées, suite à l'étape de génération 75, au cours de laquelle ou desquelles on vérifie que la nouvelle chaîne générée est toujours plausible. Par exemple, si deux chaînes successives se terminent par une lettre, on supprime un caractère en plus, et ce jusqu'à ce que la nouvelle chaine se termine par un caractère particulier.

Par exemple, si la nouvelle chaîne ne compte plus de caractères particuliers, on considère qu'il s'agit d'une chaine trop courte et il est mis fin à la recherche. On peut prévoir dans ce dernier cas de renvoyer une réponse de type ABSENT. Selon un mode de réalisation non représenté, la génération de l'ensemble des chaines string est effectuée une seule fois, préalablement à l'itération.

L'éventuelle étape de hachage peut aussi être effectuée préalablement à l'itération, toutes les chaines string étant alors gardées dans une mémoire temporaire sous forme hachée.

## Revendications

1. Module (27) destiné à être embarqué dans un équipement (22) d'un réseau de télécommunications, et comprenant :
une base de données (24) mémorisant au moins des valeurs de champ de recherche comprenant des adresses URL, certaines au moins des dites adresses URL étant mémorisées sous une forme encryptée,
des moyens d'encryptage (28) aptes à découper une valeur de champ de recherche (add_ex) reçue dans un message de requête (R) reçu par le module en portions élémentaires (P1,...Pn), à générer un ensemble de combinaisons (Comb⁽ⁱ⁾) des portions élémentaires, à encrypter des informations, chaque combinaison de l'ensemble constituant une information à encrypter, de façon à permettre une recherche d'au moins une information dans la base de données par comparaison avec les valeurs de champ de recherche encryptées.

2. Module (27) selon la revendication 1, dans lequel les moyens d'encryptage (28) sont protégés.

3. Module (27) selon l'une des revendications 1 ou 2, dans lequel les moyens d'encryptage (28) mettent en oeuvre un algorithme de cryptage destructif.

4. Module (27) selon l'une des revendications 1 ou 2, dans lequel les moyens d'encryptage (28) mettent en oeuvre un algorithme de cryptage asymétrique.

5. Module (27) selon l'une des revendications 1 à 4, dans lequel la totalité du contenu de la base de données (24) est chiffrée, le module comprenant en outre une mémoire (31) pour stocker une clé de déchiffrage.

6. Module (27) selon l'une des revendications 1 à 5, comprenant
une mémoire (34) mémorisant un premier numéro de licence,
des moyens de traitement (33) aptes à calculer d'un second numéro de licence en fonction d'un identifiant de l'équipement dans lequel le module est embarqué,
des moyens de communication du premier et du second numéro de licence à un équipement central.

7. Procédé d'interrogation d'une base de données d'adresses URL embarquée (24) dans un équipement (22) d'un réseau de télécommunications, comprenant les étapes consistant à
recevoir un message de requête (R),
extraire des informations (URL₀) du message de requête en découpant (42) une valeur de champ de recherche (add_ex) reçue dans le message de requête (R) en portions élémentaires (P1,...Pn), et en générant (43) un ensemble de combinaisons (Comb⁽ⁱ⁾) des portions élémentaires,
encrypter les informations extraites, chaque combinaison de l'ensemble constituant une information à encrypter,
rechercher au moins uneinformation encryptée ( 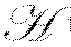 *H*(URL₀)) dans la base de données par comparaison de chaque information encryptée avec des valeurs encryptées d'adresses URL ( 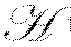 (SF_1), 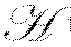 (SF_2)) mémorisées dans la base de données en tant que valeurs de champs de recherche, et
envoyer une réponse (ABSENT) fonction d'un résultat de la recherche.

8. Procédé selon la revendication 7, dans lequel l'étape d'extraction consiste à
(75) générer à partir d'une valeur de champ de recherche (add_ex) reçue dans le message de requête (R), ladite valeur comprenant une chaine de caractères initiale, un ensemble comprenant la chaine de caractères initiale et/ou au moins une chaîne de caractères obtenue par suppression d'au moins un caractère à l'une et/ou l'autre des extrémités de la chaine de caractère initiale, chaque chaîne de caractères de l'ensemble constituant une information à encrypter (string),
dans lequel l'étape de recherche (76) est effectuée itérativement, en choisissant l'information à rechercher par longueur de chaîne décroissante, et
dans lequel, en cas de succès à une itération donnée, il est mis fin à la recherche (77).

9. Procédé selon la revendication 7, dans lequel
à chaque itération, l'information correspondante comprend une chaine de caractères (string) obtenue par suppression d'un ou plusieurs caractères(s) particulier(s), du type notamment « / », « ? », « # », « . » ou autre, ou par suppression des caractères non-particuliers, du type notamment lettres et chiffres, précédent ou suivant un caractère particulier au début ou à la fin respectivement, de la chaine de caractères de l'information recherchée lors de l'itération précédente.

## Patentansprüche

1. Modul (27), das zur Integration in ein Telekommunikationsnetzgerät (22) bestimmt ist und Folgendes umfasst:
eine Datenbank (24), die mindestens Suchfeldwerte speichert, welche URL-Adressen umfassen, wobei mindestens bestimmte der besagten URL-Adressen in einer verschlüsselten Form gespeichert werden,
Verschlüsselungsmittel (28), die dazu in der Lage sind, einen Suchfeldwert (add_ex), der in einer von dem Modul empfangenen Anfragenachricht (R) empfangen wird, in elementare Teile (P1, ..., Pn) zu zerlegen, eine Menge an Kombinationen (Comb⁽ⁱ⁾) aus den elementaren Teilen zu erzeugen, Informationen zu verschlüsseln, wobei jede Kombination aus der Menge eine zu verschlüsselnde Information bildet, so dass eine Suche von mindestens einer Information in der Datenbank durch Vergleich mit den verschlüsselten Suchfeldwerten ermöglicht wird.

2. Modul (27) nach Anspruch 1, wobei die Verschlüsselungsmittel (28) geschützt sind.

3. Modul (27) nach einem der Ansprüche 1 oder 2, wobei die Verschlüsselungsmittel (28) einen destruktiven Verschlüsselungsalgorithmus einsetzen.

4. Modul (27) nach einem der Ansprüche 1 oder 2, wobei die Verschlüsselungsmittel (28) einen asymmetrischen Verschlüsselungsalgorithmus einsetzen.

5. Modul (27) nach einem der Ansprüche 1 bis 4, wobei die Gesamtheit des Inhalts der Datenbank (24) chiffriert ist, wobei das Modul des Weiteren einen Speicher (31) zum Speichern eines Dechiffrierschlüssels umfasst.

6. Modul (27) nach einem der Ansprüche 1 bis 5, umfassend
einen Speicher (34), der eine erste Lizenznummer speichert,
Verarbeitungsmittel (33), die dazu in der Lage sind, eine zweite Lizenznummer in Abhängigkeit einer Kennung des Gerätes, in dem das Modul integriert ist, zu berechnen,
Mittel zur Kommunikation der ersten und der zweiten Lizenznummer an ein Zentralgerät.

7. Verfahren zum Abfragen einer URL-Adressdatenbank (24), die in einem Telekommunikationsnetzgerät (22) integriert ist, umfassend die Schritte darin bestehend,
eine Anfragenachricht (R) zu empfangen,
Informationen (URL₀) aus der Anfragenachricht zu extrahieren durch Zerlegen (42) eines in der Anfragenachricht (R) empfangenen Suchfeldwerts (add_ex) in elementare Teile (P1, ..., Pn) und durch Erzeugen (43) einer Menge an Kombinationen (Comb⁽ⁱ⁾) aus den elementaren Teilen,
die extrahierten Informationen zu verschlüsseln, wobei jede Kombination aus der Menge eine zu verschlüsselnde Information bildet,
mindestens eine verschlüsselte Information (H(URL₀)) in der Datenbank zu suchen durch Vergleich jeder verschlüsselten Information mit verschlüsselten URL-Adresswerten (H(SF_1)), H(SF_2)), die in der Datenbank als Suchfeldwerte gespeichert sind, und
abhängig von einem Suchergebnis eine Antwort (ABSENT) zu senden.

8. Verfahren nach Anspruch 7, wobei der Extrahierschritt besteht im
Erzeugen (75), aus einem in der Anfragenachricht (R) empfangenen Suchfeldwert (add_ex), wobei der besagte Wert eine ursprüngliche Zeichenkette umfasst, einer Menge, welche die ursprüngliche Zeichenkette und/oder mindestens eine Zeichenkette umfasst, die durch Löschen mindestens eines Zeichens an dem einen und/oder dem anderen Ende der ursprünglichen Zeichenkette erhalten wurde, wobei jede Zeichenkette aus der Menge eine zu verschlüsselnde Information (String) bildet, wobei der Suchschritt (76) iterativ ausgeführt wird durch Auswählen der zu suchenden Information nach abnehmender Kettenlänge, und
wobei, im Falle des Erfolgs bei einer gegebenen Iteration, die Suche (77) beendet wird.

9. Verfahren nach Anspruch 7, wobei
die entsprechende Information bei jeder Iteration eine Zeichenkette (String) umfasst, die erhalten wurde durch Löschen eines oder mehrerer Sonderzeichen, insbesondere vom Typ "/", "?", "#", "." oder sonstig, oder durch Löschen von Nicht-Sonderzeichen, insbesondere vom Typ Buchstaben und Zahlen, die einem Sonderzeichen am Anfang bzw. am Ende der Zeichenkette der Information, die bei der vorangegangenen Iteration gesucht wurde, voran- oder nachstehen.

## Claims

1. Module (27) intended to be included onboard the equipment (22) of a telecommunication network and comprising:
a database (24) storing at least search field values including URL addresses, at least some of said URL addresses being stored in an encrypted form,
encryption means (28) capable of breaking down a search field value (add_ex) received in a request message (R) received by the module into elementary portions (P1,...Pn), generating a set of combinations (Comb⁽ⁱ⁾) of elementary portions, encrypting pieces of information, each combination of the set constituting a piece of information to be encrypted, in order to allow at least one piece of information search in the database by comparison with the encrypted search field values.

2. Module (27) according to claim 1, in which the encryption means (28) are protected.

3. Module (27) according to one of claims 1 or 2, in which the encryption means (28) use a destructive encryption algorithm.

4. Module (27) according to one of claims 1 or 2, in which the encryption means (28) use an asymmetrical encryption algorithm.

5. Module (27) according to one of claims 1 to 4, in which the totality of the content of the database (24) is encrypted, the module comprising moreover a memory (31) for storing a decryption key.

6. Module (27) according to one of claims 1 to 5, comprising
a memory (34) storing a first licence number,
processing means (33) capable of calculating a second licence number as a function of an identifier of the equipment in which the module is included onboard,
means of communication of the first and second licence numbers to a central equipment.

7. Method of interrogation of a database of URL addresses (24) included onboard the equipment (22) of a telecommunications network, comprising the steps consisting of
receiving a request message (R),
extracting pieces of information (URL₀) from the request message by breaking down (42) a search field value (add_ex) received in the request message ® into elementary portions (P1,...Pn,), and by generating (43) a set of combinations (Comb⁽ⁱ⁾) of elementary portions,
encrypting the extracted information, each combination of the set constituting a piece of information to be encrypted,
searching for at least one encrypted piece of information ( 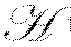 (URL₀)) in the database by comparison of each encrypted piece of information with encrypted URL address values ( 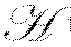 *H*(SF_1), 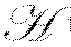 (SF_2)) stored in the database as search field values, and
sending a response (ABSENT) depending on a result of the search.

8. Method according to claim 7, in which the extraction step consists of
(75) generating from a search field value (add_ex) received in the request message (R), said value comprising an initial string of characters, a set comprising the initial string of characters and/or at least a string of characters obtained by deletion of at least one character at one end and/or at the other end of the initial character string, each string of characters of the set constituting a piece of information to be encrypted (string),
in which the search step (76) is carried out iteratively, by choosing the information to be search for in order of decreasing string length, and
in which, the search is ended (77) in the event of success in a given iteration.

9. Method according to claim 7, in which, at each iteration, the corresponding information comprises a string of characters (string) obtained by deletion of one or more special characters, in particular of the type "/", "?", "#", "." or other, or by deletion of the non-special characters, in particular of the letter or figure type, preceding or following a special character at the start or at the end respectively of the string of characters of the information searched for during the preceding iteration.
